# EUROPÄISCHE PATENTSCHRIFT

(11) **EP 2 885 907 B1**
(45) Veröffentlichungstag und Bekanntmachung des Hinweises auf die Patenterteilung: **18.01.2017**
(21) Anmeldenummer: 13750850.3
(22) Anmeldetag: 12.08.2013
(51) Int. Cl.: H04W 12/12

(54) **VERFAHREN ZUR INSTALLATION VON SICHERHEITSRELEVANTEN ANWENDUNGEN IN EINEM SICHERHEITSELEMENT EINES ENDGERÄT**
METHOD FOR INSTALLING OF SECURITY RELEVANT APPLICATIONS IN A SECURITY ELEMENT OF A TERMINAL
PROCÉDÉ D'INSTALLATION DES APPLICATIONS DE SÉCURITE DANS UN ÉLÈMENT DE SÉCURITÉ D'UN TERMINAL

(30) Priorität: 14.08.2012 DE 102012016164
(43) Veröffentlichungstag der Anmeldung: 24.06.2015
(73) Patentinhaber: Giesecke & Devrient GmbH, 81677 München (DE)
(72) Erfinder: SCHÄFER, Frank, 82178 Puchheim (DE); ALBERT, Daniel, 81827 München (DE); DIETZE, Claus, 82395 Obersöchering (DE); LUYKEN, Johannes, 81825 München (DE); SCHEDEL, Ralf, 82319 Starnberg (DE); SCHUSTER, Helmut, 87660 Irsee (DE)
(86) Internationale Anmeldenummer: PCT/EP2013/002419
(87) Internationale Veröffentlichungsnummer: WO 2014/026760

(56) Entgegenhaltungen:
- EP-A1- 1 076 279
- US-A1- 2005 132 227
- US-A1- 2007 234 343
- US-A1- 2010 211 772

## Beschreibung

Die vorliegende Erfindung betrifft ein Verfahren zur Installation eines sicherheitsrelevanten Anteils einer Applikation in einem Sicherheitselement eines portablen Endgeräts, ein entsprechendes Sicherheitselement sowie ein portables Endgerät mit einem solchen Sicherheitselement.

Die Funktionalität portabler Endgeräte, wie beispielsweise von Mobilfunkendgeräten, Smartphones, Tablets und dergleichen, kann durch die Installation von Softwarefunktionalitäten, so genannten Applikationen oder "Apps", in bekannter Weise erweitert werden. Verschiedene dieser Applikationen dienen dabei Anwendungen, die auch sicherheitsrelevante Daten umfassen und/ oder verarbeiten. Sicherheitsrelevante Daten können dabei beispielsweise geheim zu haltende persönliche Daten eines Nutzers des Endgeräts sein, wie zum Beispiel biometrische Daten, oder Daten, welche zur Abwicklung finanzieller Transaktionen verwendet werden, wie beispielsweise Kreditkartennummer, Kontodaten, Inhalt elektronischer Börsen, kryptographische Schlüssel, etc. Unter einem sicherheitsrelevanten Anteil einer Applikation wird im Zusammenhang mit der vorliegenden Erfindung sowohl von der Applikation umfasste oder verarbeitete sicherheitsrelevante Daten als auch (Teil-) Funktionalitäten der Applikation, die dem Verarbeiten dieser Daten dienen, verstanden.

Es ist bekannt, derartige sicherheitsrelevante Anteile einer Applikation vor Manipulation und unberechtigtem Zugriff dadurch zu schützen, dass diese Anteile im Endgerät in einem besonders gesicherten Bereich gespeichert bzw. installiert werden.

Geeignete gesicherte Bereiche stellen insbesondere in ein Endgerät integrierbare oder darin fest eingebaute Sicherheitselemente dar. Entfernbar integrierbare Sicherheitselemente sind beispielsweise SIM/ UICC-Mobilfunkkarten, sichere Multimediakarten oder dergleichen. Als fest in das Endgerät eingebaute Sicherheitselemente können beispielsweise embedded-SIM/ UICC-Mobilfunkkarten, TPMs ("Trusted Platform Moduls") oder NFC-Module dienen. Schließlich können auch sichere Ausführungsumgebungen innerhalb einer spezifischen Hardwarearchitektur des Endgeräts, beispielsweise innerhalb einer ARM TrustZone-Architektur, als Sicherheitselemente dienen, wie beispielsweise ein "Trusted Execution Environment" gemäß der "Global Platform"-Spezifikation.

Ein Installieren von Daten und/ oder Applikationen oder Applikationsanteilen in ein solches Sicherheitselement ist in der Regel kryptographisch gesichert. Zunehmend werden sicherheitsrelevante Anteile von auf portablen Endgeräten installierten Applikationen mit der Hilfe vertrauenswürdiger Instanzen, so genannter "Trusted Service Manager" (im Folgenden als TSM bezeichnet), durchgeführt. Diese nehmen als Dienstleister die sicherheitsrelevanten Anteile entgegen und führen den Installationsprozess, d.h. das gesicherte Installieren der Anteile in dem Sicherheitselement, durch. Im Folgenden wird in diesem Zusammenhang die Formulierung verwendet, wonach der TSM das Sicherheitselement "verwaltet". Vor dem Schritt des Installierens werden kryptographische Schlüssel zwischen dem TSM und der die Applikation bereitstellenden Institution, beispielsweise einer Bank im Falle einer zu personalisierenden Bezahlapplikation, ausgetauscht und in das Sicherheitselement in gesicherter Weise eingebracht. Mittels dieser Schlüssel kann der Installationsprozess kryptographisch gesichert werden.

Zu beachten ist, dass ein Sicherheitselement der oben beschriebenen Art eine Mehrzahl von gesicherten Bereichen umfassen kann. D.h. dass beispielsweise eine SIM-Karte als physisches Sicherheitselement eine Mehrzahl von gesicherten Bereichen in einem Speicher der Karte umfassen kann. Insbesondere können diese gesicherten Bereiche als so genannte "Security Domains" gemäß der GlobalPlatform-Spezifikation vorliegen (vgl. z.B. Global Platform, Card Specification, Version 2.2). Eine solche "Security Domain" ist in der Regel einer vorgegebenen externen Instanz zugeordnet, beispielsweise dem Herausgeber des Datenträgers, einem Netzbetreiber, einem Applikationsanbieter oder dergleichen. Diese Instanz wird dann im Folgenden auch als "Besitzer" der "Security Domain" bezeichnet. In analoger Weise wird im Folgenden auch von einem "Besitzer" eines Sicherheitselements gesprochen, wenn diejenige Instanz bezeichnet werden soll, der das Sicherheitselement zugeordnet ist. Der Besitzer des Sicherheitselements ist insbesondere für die Schlüsselarchitektur des Sicherheitselements verantwortlich.

Eine "Security Domain" stellt eine privilegierte Applikation dar, welche über eine eigene kryptographische Schlüsselarchitektur verfügt. Dies ermöglicht insbesondere das gesicherte Installieren von Daten und Applikationen in dem durch die "Security Domain" verwalteten Bereich eines Speichers des betreffenden Datenträgers oder Sicherheitsmoduls. "Security Domains" können auf einem Sicherheitselement in hierarchisch angeordneter Weise vorliegen. Insbesondere können verschiedene "Security Domains" auf einem physischen Sicherheitselement, beispielsweise einer SIM-Karte, in vorstehend beschriebener Weise zum Installieren sicherheitsrelevanter Anteile einer Applikation durch verschiedene TSM verwaltet werden.

Nachteilig an der beschriebenen Vorgehensweise zum Installieren von sicherheitsrelevanten Anteilen einer Applikation in einem Sicherheitselement ist es, dass ein Entwickler, welcher Applikationen programmiert und über einen Applikationsanbieter, beispielsweise über einen so genannten "AppStore", zum Download auf ein portables Endgerät anbietet, auf diesem Weg praktisch keine Applikationen mit sicherheitsrelevanten Anteilen anbieten kann. Die freie Entwicklung von Applikationen mit sicherheitsrelevanten Anteilen wird dadurch wesentlich eingeschränkt und erschwert.

Dies gilt deshalb, da eine Installation sicherheitsrelevanter Anteile in ein Sicherheitselement des Endgeräts bisher lediglich in Kooperation mit dem betreffenden TSM des Sicherheitselements möglich ist. Dieser TSM ist dem Entwickler aber in der Regel nicht bekannt, insbesondere da mittlerweile eine Vielzahl von TSM existiert. Weiterhin können verschiedene Nutzer von Endgeräten zum Verwalten jeweils eines Sicherheitselements, welches grundsätzlich zum Installieren derselben Applikation bzw. deren sicherheitsrelevanten Anteils vorgesehen ist, jeweils verschiedene TSM zur Verwaltung der entsprechenden Sicherheitselemente vorsehen. Schließlich hat ein Entwickler einer Applikation keinen Zugriff und keinen Einfluss auf die Schlüsselarchitektur eines Sicherheitselements eines Endgeräts eines beliebigen Nutzers, welcher die Applikation über einen "AppStore", d.h. ohne direkte Interaktion mit dem Entwickler, beziehen und installieren möchte. D.h. selbst dann, wenn der Entwickler im konkreten Fall den zuständigen TSM kennen würde und erreichen könnte, könnte eine Installation von Daten auf dem Sicherheitselement nicht erfolgen. Seitens des Entwicklers könnten zwar entsprechende kryptographische Schlüssel mit dem TSM ausgetauscht werden, es wäre dem Entwickler aber nicht möglich, diese Schlüssel in das Sicherheitselement einzubringen, da er keinen Zugriff auf ein solches Sicherheitselement hat.

EP 1076279 A1 zeigt ein TPM-Modul in einem PC, welches den Hashwert und eine Signatur einer Software prüft, die auf dem PC installiert werden soll. Für einen File-Transfer-Client wird in US2005/0132227A1 eine gemeinsame Schnittstelle zu unterschiedlichen Prüfeinheiten, wie Viren- oder Signaturprüfeinheiten, vorgeschlagen.

Aufgabe der vorliegenden Erfindung ist es, eine Installation einer von einem beliebigen Applikationsprovider bereitgestellten Applikation mit einem sicherheitsrelevanten Anteil auf einem portablen Endgerät mit einem darin integrierten Sicherheitselement auf einfache und sichere Weise zu ermöglichen.

Diese Aufgabe wird durch ein Verfahren, ein Sicherheitselement sowie ein portables Endgerät mit Sicherheitselement mit den Merkmalen der unabhängigen Ansprüche gelöst. Vorteilhafte Ausgestaltungen und Weiterbildungen sind in den abhängigen Ansprüchen angegeben.

Die vorliegende Erfindung basiert auf dem Grundgedanken, dass der sicherheitsrelevante Anteil der Applikation nicht vom Entwickler an den TSM übergeben und dann in dem Sicherheitselement installiert wird, sondern zusammen mit den restlichen, nicht sicherheitsrelevanten Anteilen der Applikation, welche in dem Endgerät zu installieren sind, an das Endgerät gesendet wird. Die Übertragung des gesendeten sicherheitsrelevanten Anteils der Applikation an den zuständigen TSM erfolgt von dem Endgerät. Das TSM installiert den weiter gesendeten, sicherheitsrelevanten Teil der Applikation im Sicherheitselement. Die Übertragung zum TSM kann durch das Endgerätes oder das Sicherheitselement selbst erfolgen. Eine Bestimmung (Auswahl) des zuständigen TSM erfolgt mit Hilfe von auf dem Sicherheitselement und /oder Endgerät gespeicherten Informationen (Auswahldaten).

Auf diese Weise kann einerseits der Entwickler - unabhängig von dem Sicherheitselement und dessen Besitzer sowie unabhängig von dem zuständigen TSM, der das Sicherheitselement verwaltet, in dem der sicherheitsrelevante Anteil installiert werden soll, die vollständige Applikation anbieten. Eine nach dem bisherigen Verfahren notwendige Abstimmung des Herstellers des sicherheitsrelevanten Anteils der Applikation, nämlich des Entwicklers, mit dem TSM kann unterbleiben, insbesondere hinsichtlich der zum Installieren im Sicherheitselement notwendigen kryptographischen Schlüssel. Diese liegen, wegen der bereits bestehenden Beziehung des Besitzers des Sicherheitselements mit dem das Sicherheitselement verwaltenden TSM, bereits sowohl im Sicherheitselement als auch beim TSM vor. Auf diese Weise kann - nun unabhängig vom Entwickler und dem Applikationsprovider - die Installation des sicherheitsrelevanten Anteils der Applikation im Zusammenspiel des Sicherheitselements mit dem TSM erfolgen.

Konkret umfasst ein erfindungsgemäßes Verfahren zur Installation eines sicherheitsrelevanten Anteils einer von einem Entwickler über einen Applikationsanbieter bereitgestellten Applikation in einem Sicherheitselement eines portablen Endgeräts folgende Schritte: Das Endgerät fordert die Applikation bei dem Applikationsanbieter an und empfängt die Applikation anschließend, als Resultat der Anforderung, von dem Applikationsanbieter. Die Applikation kann mittels des Endgeräts beispielsweise von einem Internetportal des Applikationsanbieters heruntergeladen werden. In der Regel empfängt das Endgerät die Applikation bereits in einer Form, in der der sicherheitsrelevante Anteil und nicht sicherheitsrelevante Anteile getrennt vorliegen. Anderenfalls kann das Endgerät oder das Sicherheitselement des Endgeräts eingerichtet sein, den sicherheitsrelevanten Anteil der Applikation zu bestimmen und gegebenenfalls von den restlichen Anteilen zu trennen.

In einem weiteren Schritt wird der sicherheitsrelevante Anteil der Applikation an eine das Sicherheitselement verwaltende, vertrauenswürdige Instanz, beispielsweise einen TSM, übertragen. Dieser Schritt kann durch das Sicherheitsmodul und/ oder das Endgerät erfolgen. Eine solche Übertragung kann beispielsweise über Internet oder über ein Mobilfunknetz, z.B. per SMS, erfolgen. Das Sicherheitselement, welches in das Endgerät integriert ist, kann zur Übertragung dieser Daten Datenkommunikationsschnittstellen des Endgeräts verwenden, beispielsweise mittels SIM Toolkit.

Abschließend installiert die vertrauenswürdige Instanz den sicherheitsrelevanten Anteil der Applikation in dem Sicherheitselement. Die vertrauenswürdige Instanz kann den sicherheitsrelevanten Anteil der Applikation vor dem Installieren in dem Sicherheitselement geeignet aufbereiten, beispielsweise hinsichtlich eines Installationsformats, hinsichtlich verschiedener Sicherheitsvorgaben oder dergleichen.

Ein erfindungsgemäßes Sicherheitselement für ein portables Endgerät ist demnach eingerichtet, wenn es in das portable Endgerät integriert ist, einen sicherheitsrelevanten Anteil einer durch das Endgerät empfangenen Applikation an eine das Sicherheitselement verwaltende, vertrauenswürdige Instanz zu übertragen.

Ein erfindungsgemäßes portables Endgerät schließlich umfasst ein erfindungsgemäßes Sicherheitselement, entfernbar integriert oder fest eingebaut, und ist eingerichtet, ein erfindungsgemäßes Verfahren in der beschriebenen Weise zu unterstützen.

Unter Verwendung eines solchen Endgeräts und mittels des erfindungsgemäßen Verfahrens kann eine Installation einer von einem beliebigen Entwickler über einen Applikationsanbieter bereitgestellten Applikation auf einfache und sichere Weise erfolgen, wobei ein sicherheitsrelevanter Anteil der Applikation auf dem Sicherheitselement des Endgeräts installiert wird.

Vorzugsweise wird der sicherheitsrelevante Anteil der Applikation geprüft, bevor dieser in dem Sicherheitselement installiert wird. Eine solche Prüfung ist insbesondere dann sinnvoll und erhöht die Sicherheit des Verfahrens, wenn der sicherheitsrelevante Anteil ausführbaren oder interpretierbaren Code umfasst, der im dem Sicherheitselement ausgeführt werden soll. Aber auch nicht ausführbare Daten, beispielsweise Personalisierungsdaten, können geprüft werden.

Eine Prüfung kann jeweils verschiedene Aspekte betreffen. Im Zusammenhang mit ausführbarem Code kann beispielsweise geprüft werden, ob der sicherheitsrelevante Anteil kompatibel mit dem Sicherheitselement ist, beispielsweise zu einem Prozessor und/ oder einem Interpreter des Sicherheitselements, einem Betriebssystem des Sicherheitselements und dergleichen. Auch eine Einhaltung technischer Spezifikationen kann ein Gegenstand der Prüfung sein, beispielsweise ob verwendete Kommandos einer gegebenen Spezifikation genügen. Weiter kann der sicherheitsrelevante Anteil hinsichtlich der durch diesen Anteil bereitgestellten Funktionalität geprüft werden, insbesondere auch dahingehend, ob der sicherheitsrelevante Anteil Schadcode umfasst. Andere Sicherheitsaspekte, beispielsweise die Anfälligkeit des sicherheitsrelevanten Anteils gegenüber bekannten Angriffen auf Sicherheitselemente, beispielsweise so genannten Seitenkanalangriffen, können alternativ oder zusätzlich geprüft werden.

Im Zusammenhang mit ausführbarem oder nicht ausführbarem Code kann beispielsweise eine Prüfung hinsichtlich Integrität und/ oder Authentizität der betreffenden Daten stattfinden. Dazu können bekannte Methoden verwendet werden, beispielsweise Prüfsummen, so genannte "Message Authentication Codes" bzw. Zertifikate, beispielsweise basierend auf einer asymmetrischen Schlüsselarchitektur.

Eine solche Prüfung kann durch verschiedene Stellen durchgeführt werden. Zum einen kann die vertrauenswürdige Instanz den sicherheitsrelevanten Anteil prüfen. Eine solche Prüfung findet vor dem Installieren des Anteils in dem Sicherheitselement statt. Ein Installieren erfolgt nur dann, wenn die Prüfung erfolgreich verlaufen ist, d.h. wenn der sicherheitsrelevante Anteil der Applikation vorgegebenen, im Rahmen der Prüfung überprüften Anforderungen genügt.

Die Prüfung kann aber in gleicher Weise auch durch eine externe Prüfinstanz, beispielsweise eine Softwarezertifizierungsstelle, den Herausgeber des Sicherheitselements, den Applikationsanbieter oder ähnliche Instanzen erfolgen. Der Entwickler kann dazu, bevor er die Applikation über den Applikationsanbieter zum Download bereitstellt, den sicherheitsrelevanten Anteil der Applikation der Prüfinstanz oder Zertifizierungsstelle vorlegen. Diese prüft den Anteil und versieht diesen, nach erfolgreicher Prüfung, mit einem entsprechenden Zertifikat.

Im dem Fall, dass der sicherheitsrelevante Anteil, wenn er von der vertrauenswürdigen Instanz empfangen wird, bereits ein solches Zertifikat einer Zertifizierungsstelle umfasst, kann der Schritt des Prüfens durch die vertrauenswürdige Instanz lediglich im Verifizieren des Zertifikats bestehen. Die vertrauenswürdige Instanz kann aber auch bei Vorliegen des Zertifikats alternativ oder zusätzlich eigene Prüfungen vornehmen.

Als besonders sicher kann das erfindungsgemäße Verfahren angesehen werden, wenn das Zertifikat, mit dem der in dem Sicherheitselement zu installierende sicherheitsrelevante Anteil zertifiziert worden ist, von derjenigen Instanz stammt, die gleichzeitig den Besitzer des Sicherheitselements darstellt. Dies könnte im Falle einer SIM/ UICC-Mobilfunkkarte beispielsweise der Herausgeber des Sicherheitselements sein. Auch der Applikationsanbieter könnte zugleich Besitzer des Sicherheitselements und Prüfinstanz sein, insbesondere Besitzer einer "Security Domain" auf einem physischen Sicherheitsmodul, wobei die "Security Domain" die Rolle eines Sicherheitselements im Sinne der vorliegenden Erfindung einnimmt. Dieser Besitzer ist es in der Regel erst, welcher eine Installation des sicherheitsrelevanten Anteils auf dem Sicherheitselement durch die vertrauenswürdige Instanz in der nachstehend beschriebenen Weise ermöglicht.

Wie bereits erwähnt, erfolgt der Schritt des Installierens des sicherheitsrelevanten Anteils in dem Sicherheitselement durch die vertrauenswürdige Instanz vorzugsweise kryptographisch gesichert. Die hierzu verwendeten kryptographischen Schlüssel werden dann in einem dem Installieren vorgelagerten Schritt zwischen dem Besitzer des Sicherheitselements und der vertrauenswürdigen Instanz ausgetauscht. Ein entsprechender Schlüsselsatz wird in dem Sicherheitselement hinterlegt.

Nicht sicherheitsrelevante Anteile der Applikation werden in der Regel in dem Endgerät, unabhängig von einem Sicherheitselement, installiert. Eine solche Installation erfolgt bevorzugt vor einer Installation des sicherheitsrelevanten Anteils der Applikation in dem Sicherheitselement.

Die vertrauenswürdige Instanz ist eine entfernt (von dem Endgerät) angeordnete Instanz. Der sicherheitsrelevante Anteil der Applikation wird der vertrauenswürdigen Instanz über ein Netzwerk übertragen.

Im einfachsten Fall liegt in dem Endgerät lediglich ein Sicherheitselement vor, in dem der sicherheitsrelevante Anteil der Applikation installiert werden kann. Im Falle, dass mehrere Sicherheitselemente, beispielsweise mehrere "Security Domains", für eine Installation des sicherheitsrelevanten Anteils der Applikation geeignet sind, kann die Applikation einen davon auswählen. Eine solche Auswahl kann von einem nicht sicherheitsrelevanten Anteil der Applikation durchgeführt werden. Dementsprechend ermittelt die Applikation, abhängig von dem ausgewählten Sicherheitselement, auch die vertrauenswürdige Instanz, welche das betreffende Sicherheitselement verwaltet.

Falls für die Verwaltung eines Sicherheitselements, beispielsweise des in der beschriebenen Weise ausgewählten Sicherheitselements, eine Mehrzahl von vertrauenswürdigen Instanzen zur Verfügung stehen, kann die Applikation wiederum eine daraus auswählen und in dieser Weise ermitteln, welche vertrauenswürdige Instanz den sicherheitsrelevanten Anteil der Applikation in dem Sicherheitselement installieren soll. Es kann aber auch vorgesehen sein, dass ein ausgewähltes Sicherheitselement bzw. ein als einziges geeignetes Sicherheitselement vorliegendes Sicherheitselement bei einer Mehrzahl von für dieses Sicherheitselement zur Verfügung stehenden vertrauenswürdigen Instanzen, beispielsweise abhängig von der Applikation, eine solche Instanz zur Verwaltung im Zusammenhang mit dieser Applikation auswählt.

Nachdem das Sicherheitselement, in dem der sicherheitsrelevante Anteil installiert werden soll, sowie die dieses Sicherheitselement im konkreten Fall verwaltende vertrauenswürdige Instanz in der vorstehend beschriebenen Weise ermittelt worden ist, überträgt dieses Sicherheitselement den sicherheitsrelevanten Anteil der Applikation an die vertrauenswürdige Instanz. Eine in einem nachfolgenden Schritt zu erfolgende Installation ist bereits beschrieben worden.

Wie bereits erwähnt, umfasst der Begriff des "Sicherheitselements" im Zusammenhang mit der vorliegenden Erfindung zum einen physische Sicherheitselemente oder -module, welche entweder entfernbar in ein portables Endgerät integriert werden können oder aber darin fest eingebaut sind. Zum anderen kann ein "Sicherheitselement" im Sinne der Erfindung auch lediglich ein logisch gesicherter Bereich in einem Speicher eines solchen physischen Sicherheitselements oder -moduls sein. Dabei kann ein physisches Sicherheitsmodul eine Mehrzahl solcher gesicherter Bereiche, d.h. solcher logischer "Sicherheitselemente" umfassen. Wesentlich ist im Zusammenhang mit der vorliegenden Erfindung lediglich, dass es das Sicherheitselement erlaubt, sicherheitsrelevante Anteile der Applikation darin sicher zu installieren, d.h. insbesondere geschützt vor unberechtigtem Zugriff, sei es durch Auslesen, Ausführen oder durch Manipulation anderer Art.

In die Klasse der entfernbar in ein Endgerät integrierbaren Sicherheitselemente fallen bekannte portable Sicherheitsdatenträger, insbesondere SIM/UICC-Mobilfunkkarten, sichere Multimediakarten oder dergleichen. Die Klasse der fest in ein Endgerät eingebauten Sicherheitselemente umfasst beispielsweise so genannte embedded-SIM/UICC-Mobilfunkkarten, TPMs, NFC-Module und dergleichen. Gleichfalls als fest eingebaut verstanden werden sollen sichere Ausführungsumgebung innerhalb einer spezifischen Hardwarearchitektur des Endgeräts, beispielsweise ein "Trusted Execution Environment" gemäß der "Global Platform"-Spezifikation. Logische Sicherheitselemente der vorstehend genannten Art werden insbesondere durch "Security Domains" gemäß der "Global Platform"-Spezifikation bereitgestellt.

Als erfindungsgemäße portable Endgeräte eignen sich insbesondere Mobilfunkendgeräte, Smartphones, Tablet-Computer, Netbooks, Notebooks, intelligente Multimediageräte (Smart TV, Set-Top-Box ...), Smart Meter oder dergleichen, welche eingerichtet sind, ein erfindungsgemäßes Sicherheitselement aufzunehmen, oder in die ein erfindungsgemäßes Sicherheitselement bereits fest eingebaut oder implementiert ist.

Die Erfindung wird im Folgenden mit Bezug auf die beiliegenden Zeichnungen beispielhaft beschrieben. Darin zeigen:
- Figur 1: ein System umfassend ein Endgerät mit Sicherheitselement, einen Applikationsanbieter und ein TSM,
- Figur 2: Schritte einer bevorzugten Ausführungsform eines erfindungsgemäßes Verfahrens.

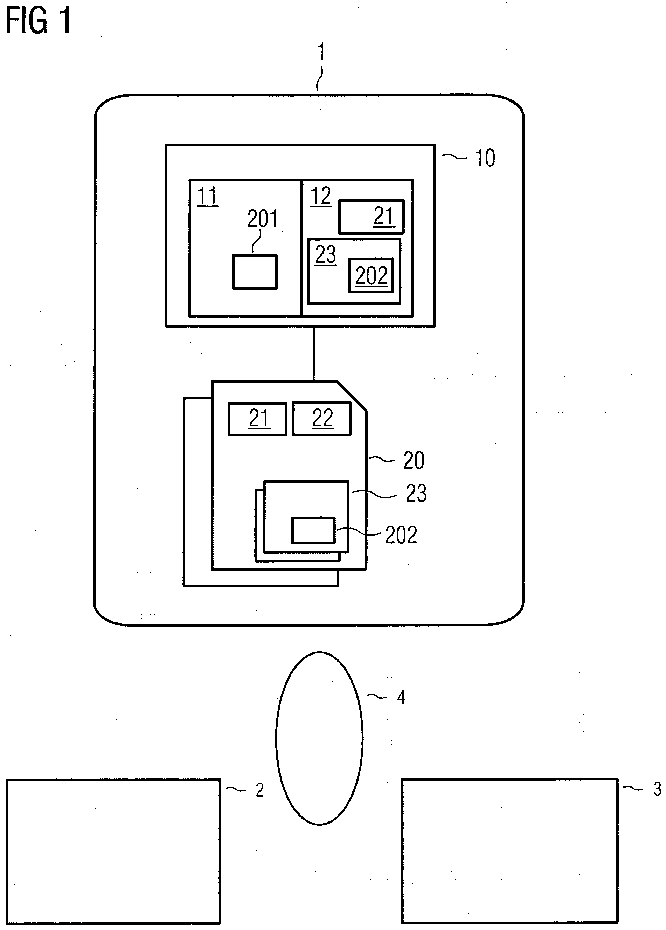

Fig.1 zeigt ein System umfassend ein Endgerät 1, einen Applikationsanbieter 2 und ein TSM 3. Die Kommunikation zwischen den Systemkomponenten erfolgt über ein Netzwerk 4.

Der Applikationsanbieter 2 bietet im Internet unterschiedliche Applikationen zum Herunterladen auf Endgeräte an. TSMs verwalten Sicherheitselemente in Endgeräten. Das TSM 3 verwaltet in dem Sicherheitselement 20 mindestens den einen sicheren Bereich 23 des Sicherheitselements 20.

Im Folgenden wird von einem Endgerät 1 in der Form eines Smartphones ausgegangen, das entsprechend beispielsweise über ein Mobilfunknetz mit dem TSM 3 und mit einem Applikationsanbieter 2 beispielsweise über das Internet verbunden ist. Das Endgerät 1 kann alternativ zum Beispiel auch als Mobilfunkendgerät, als Tablet-Computer, als Ultra- oder Netbook, als Notebook oder dergleichen ausgebildet sein.

Das Endgerät 1 umfasst einen Mikroprozessor 10, welcher eingerichtet ist, (nachladbare) Applikationen zu speichern und auszuführen. Beispielsweise wird der nicht sicherheitsrelevante Anteil 201 einer von einem Applikationsanbieter 2 heruntergeladenen Applikation auf dem Prozessor 10 des Endgerätes 1 ausgeführt. Das Endgerät 1 umfasst eine Ausführungsumgebung 11 zur Ausführung des nicht sicherheitsrelevanten Anteils 201. Die Applikation umfasst den nicht sicherheitsrelevante Anteil 201 und einen sicherheitsrelevanten Anteil 202, der auf einem Sicherheitselement 20 zu installieren ist.

Das Endgerät 1 kann ein oder mehrere Sicherheitselemente 20 umfassen. Mit dem Mikroprozessor 10 ist ein Sicherheitselement 20 verbunden, welches im gezeigten Beispiel als SIM-Karte angedeutet ist. Das Sicherheitselement 20 ist entfernbar in das Endgerät 1 integriert. Alternativ oder zusätzlich und könnte beispielsweise auch ein Sicherheitselement 20 als sichere Speicherkarte oder dergleichen vorliegen. Alternativ oder zusätzlich zu einem entfernbar integrierten Sicherheitselement 20 könnte das Endgerät 1 auch mit einem fest eingebauten Sicherheitselement 20 ausgestattet sein, beispielsweise einer embedded-SIM/UICC-Mobilfunkkarte, einem TPM, einem NFC-Modul oder dergleichen. Schließlich könnte auch eine sichere Ausführungsumgebung 12 innerhalb einer spezifischen Hardwarearchitektur des Endgeräts 1, beispielsweise als "Trusted Execution Environment" gemäß der "Global Platform"-Spezifikation, als Sicherheitselement 20 dienen. Die sichere Ausführungsumgebung 12 wird neben der normalen Ausführungsumgebung 11 auf dem Prozessor 10 des Endgerätes 1 ausgeführt.

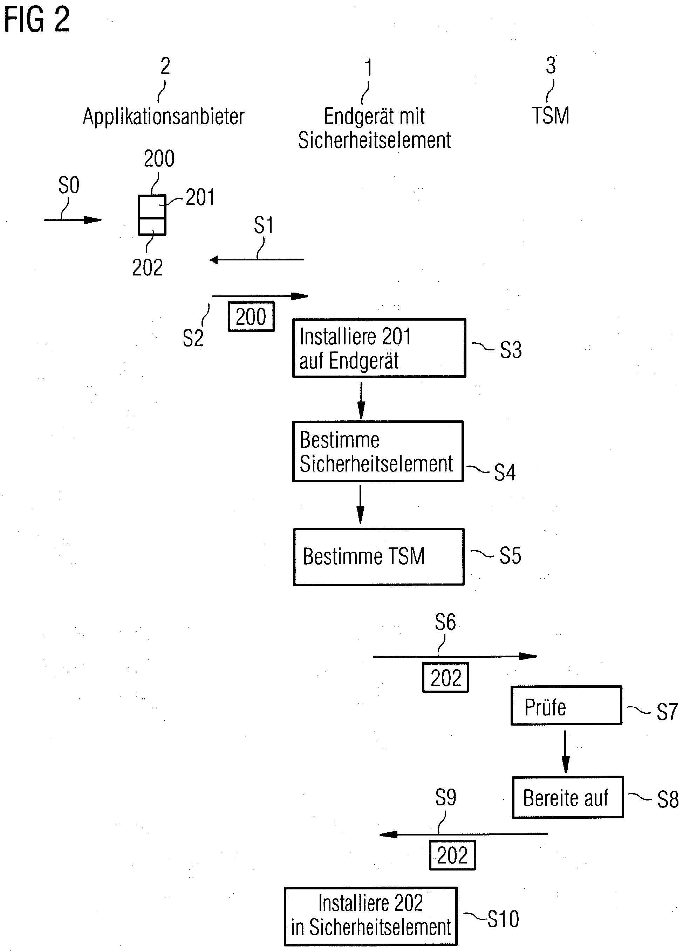

Ein Sicherheitselement 20 kann einen oder mehrere sichere Bereiche 23 umfassen. Sichere Bereiche können wie vorstehend beschrieben "Security Domains" gemäß der "Global Platform"-Spezifikation sein. Jedem Sicherheitselement ist ein TSM zugeordnet, welches dieses Sicherheitselement bzw. zumindest einen sicheren Bereich des Sicherheitselements verwaltet. Die sicheren Bereiche 23 sind grundsätzlich geeignet, darin in der nachstehend mit Bezug auf Fig. 2 beschriebenen Weise den sicherheitsrelevanten Anteil 202 einer Applikation zu installieren.

Das Endgerät 1 kann aber eine Mehrzahl von Sicherheitselementen 20,12 umfassen. Jedes Sicherheitselement 20,12 kann zudem seinerseits eine Mehrzahl von sicheren Bereichen 23 umfassen. Unterschiedlichen Sicherheitselementen können unterschiedliche TSMs zugeordnet sein. Ebenso können unterschiedlichen sicheren Bereichen unterschiedliche TSMs zugeordnet sein. In dem Sicherheitselement 20,12 ist daher eine Zuordnungsinformation 21 gespeichert. Die Zuordnungsinformation 21 gibt an, welches TSM verwaltet
- das Sicherheitselement des Endgerätes,
- die Sicherheitselemente des Endgerätes,
- die sicheren Bereiche des Sicherheitselements des Endgeräts oder
- die sicheren Bereiche der Sicherheitselemente des Endgeräts.

Das Sicherheitselement 20 umfasst schließlich eine Steuerungseinheit 22, beispielsweise in Form eines Softwaremoduls. Diese Steuerungseinheit 22 ist eingerichtet, eine Datenkommunikationsverbindung mit einer vertrauenswürdigen Instanz 3, welche das Sicherheitselement 20 verwaltet, aufzubauen. Über diese Verbindung kann das Sicherheitselement 20 mittels der Steuerungseinheit 22 dann einen sicherheitsrelevanten Anteil 202 einer Applikation 200, bevor dieser in dem Sicherheitselement 20 installiert wird, an die vertrauenswürdige Instanz 3 übertragen, wie nachstehend mit Bezug auf Fig. 2 beschrieben. Die Steuerungseinheit 22 kann zudem eingerichtet sein, das Sicherheitselement und / oder den sicheren Bereich auszuwählen, in welchen der sicherheitsrelevante Anteil installiert werden soll. Die Steuerungseinheit 22 verwendet die Zuordnungsinformation 21, kann aber auch angepasst sein die Zuordnungsinformation 21 für alle in dem Endgerät vorhandenen Installationsorte zu erstellen. Die Steuerungseinheit 22 kann in dem Sicherheitsmodul 20 oder in dem Endgerät ausgeführt werden.

Fig. 2 zeigt Schritte eines Verfahrens zum Installieren eines sicherheitsrelevanten Anteils 202 einer von einem Applikationsanbieter 2 bereitgestellten Applikation 200 in einem Sicherheitselement 20 eines Endgeräts 1.

Die Applikation 200 wird dem Applikationsanbieter 2 durch einen beliebigen Entwickler in Schritt S0 bereitgestellt. D.h. der Applikationsanbieter 2 stellt lediglich die Infrastruktur bereit, Applikationen 200 zum Herunterladen durch interessierte Nutzer bereitzustellen, wohingegen verschiedene Entwickler, welche entsprechende Applikationen 200 herstellen, den Applikationsanbieter 2 als Kanal zur Verbreitung der von ihnen hergestellten Applikationen 200 nutzen. Applikationsanbieter 2 dieser Art sind als "AppStores" bekannt, entsprechende Applikationen 200 als so genannte "Apps".

Wie in Fig. 2 gezeigt, umfasst die Applikation 200 einen sicherheitsrelevanten Anteil 202 sowie nicht sicherheitsrelevante Anteile 201. In der Regel wird der Entwickler die Applikation 200 bereits in einer Form beim Applikationsanbieter 2 hinterlegen, in der die Anteile 201 und 202 klar getrennt sind. Der nicht sicherheitsrelevante Anteil 201 der Applikation 200 kann allerdings auch gänzlich fehlen. In diesem Fall besteht die Applikation 200 lediglich aus einem sicherheitsrelevanten Anteil 202.

Wie bereits erwähnt, wird unter einem sicherheitsrelevanten Anteil 202 einer Applikation 200 vorliegend sowohl von der Applikation 200 umfasste oder verarbeitete sicherheitsrelevante Daten als auch (Teil-)Funktionalitäten der Applikation 200, die dem Verarbeiten dieser Daten dienen, verstanden. Sicherheitsrelevante Daten können dabei beispielsweise geheim zu haltende persönliche Daten eines Nutzers des Endgeräts 1 sein, wie zum Beispiel biometrische Daten, oder Daten, welche zur Abwicklung finanzieller Transaktionen verwendet werden, wie beispielsweise Kreditkartennummer, Kontodaten, Inhalt elektronischer Börsen, kryptographische Schlüssel, etc.

Bevorzugt wird der sicherheitsrelevante Anteil 202 zumindest vor dem Installieren in dem Sicherheitselement 20 (vgl. nachstehend Schritt S9) geprüft. Mit Bezug auf ausführbaren oder interpretierbaren Programmcode, der Teil des sicherheitsrelevanten Anteils 202 sein kann, können verschiedene Aspekte geprüft werden. Dies betrifft beispielsweise die Kompatibilität des sicherheitsrelevanten Anteils 202 mit dem Sicherheitselement 20, beispielsweise zu einem Prozessor und/ oder einem Interpreter des Sicherheitselements 10, einem Betriebssystem des Sicherheitselements 10 und dergleichen. Auch eine Einhaltung technischer Spezifikationen kann ein Gegenstand der Prüfung sein, beispielsweise ob in dem Code verwendete Kommandos einer gegebenen Spezifikation genügen. Weiter kann ausführbarer/ interpretierbarer Code, der Teil des sicherheitsrelevanten Anteils 202 ist, hinsichtlich der durch diesen Anteil 202 bereitgestellten Funktionalität geprüft werden. Dabei wird insbesondere geprüft, ob der sicherheitsrelevante Anteil 202 Schadcode umfasst. Andere Sicherheitsaspekte, beispielsweise die Anfälligkeit des sicherheitsrelevanten Anteils 202 gegenüber bekannten Angriffen auf das Sicherheitselement 20, beispielsweise durch so genannte Seitenkanalangriffe, können alternativ oder zusätzlich geprüft werden.

Insbesondere solche Anteile des sicherheitsrelevanten Anteils 202, die keinen ausführbaren oder interpretierbaren Code darstellen, können im Rahmen der Prüfung hinsichtlich Integrität und/oder Authentizität der betreffenden Daten geprüft werden, beispielsweise mit Hilfe von Prüfsummen, MACs bzw. Zertifikaten, beispielsweise basierend auf einer asymmetrischen Schlüsselarchitektur.

Bevorzugt erfolgt eine solche Prüfung in einem nicht gezeigten, vorgelagerten Schritt. Bevor der Entwickler die Applikation 200 dem Applikationsanbieter 2 bereitstellt, kann der Entwickler den sicherheitsrelevanten Anteil 202 einer Prüfinstanz (nicht gezeigt) vorlegen, welche als Dienstleister die beschriebene Prüfung durchführt und, bei erfolgreicher Prüfung, den Anteil 202 als geprüft kennzeichnet, beispielsweise mittels eines entsprechenden Zertifikats. Eine solche Prüfinstanz kann beispielsweise eine unabhängige Softwarezertifizierungsstelle, der Herausgeber des Sicherheitselements 10 oder eine ähnliche Instanz sein. Dieses Zertifikat kann dann von jeder weiteren Stelle, welche mit dem sicherheitsrelevanten Anteil in Berührung kommt, in einfacher Weise geprüft werden, beispielsweise dem Applikationsanbieter 2, dem Endgerät 1, oder (vgl. Schritt S7) dem TSM 3.

Alternativ oder zusätzlich kann auch der Applikationsanbieter 2 als Prüfinstanz der beschriebenen Art tätig werden. In diesem Fall kann der Entwickler dem Applikationsanbieter 2 die Applikation 200 mit noch nicht zertifiziertem, sicherheitsrelevanten Anteil 202 bereitstellen.

Die Prüfung des sicherheitsrelevanten Anteils 202 kann alternativ oder zusätzlich, wie nachstehend beschrieben (vgl. Schritt S7), von dem TSM 3 durchgeführt oder zumindest verifiziert werden.

Vorzugsweise fordert das Endgerät 1 die Applikation 200 beim Applikationsanbieter 2 an S1. In Schritt S2 empfängt das Endgerät 1 die Applikation 200 von dem Applikationsanbieter 2, beispielsweise indem die Applikation 200 über ein Internetportal des Anbieters 2 heruntergeladen wird.

Nachfolgend wird in einem Schritt S3, wenn zumindest ein nicht sicherheitsrelevanter Anteil 201 vorliegt, dieser nicht sicherheitsrelevante Anteil 201 in dem Endgerät 1, d.h. in dem Mikroprozessor des Endgeräts 1, installiert. Dieser Anteil 201, wenn installiert, kann optional die weiteren Schritte S4 und S5 des Verfahrens unterstützen.

In dem Fall, dass in dem Endgerät 1 eine Mehrzahl von Sicherheitselementen 20 vorliegt, welche jeweils geeignet sein könnten, den sicherheitsrelevanten Anteil 202 der Applikation 200 in installierter Form aufzunehmen, wird eines daraus für das weitere Verfahren in Schritt S4 bestimmt, d.h. ausgewählt. Das Bestimmen des Sicherheitselements 20 aus einer Anzahl von Sicherheitselementen kann durch die Applikation 200, d.h. genauer deren Anteil 201, und/oder durch die Steuerungseinheit 22 aus Fig.1 erfolgen. Die Art des zu installierenden sicherheitsrelevanten Anteils 202 kann die Auswahl beeinflussen. Beispielsweise kann die durch den Anteil 202 bereitgestellte Funktionalität einen Bezug zu einem Besitzer (Subscriber) eines entsprechenden Sicherheitselement 20 (SIM-Karte) aufweist. Es kann jedoch auch ein spezifisches Sicherheitselement 20 in dem Endgerät 1 vorliegen, welches als einziges der in dem Endgerät 1 vorliegenden Sicherheitselemente 20 dafür vorgesehen ist, sicherheitsrelevante Anteile 202 einer nachladbaren Applikation 200 aufzunehmen, und aus diesem Grund in Schritt S4 ausgewählt wird. Ein Endgerät mit einer sicheren Massenspeicherkarte, einem NFC-Modul und einer SIM-Karte stellt beispielsweise fest, dass nur die SIM-Karte als physisches Sicherheitselement einen geeigneten Krypto-Coprozessor umfasst. Für eine SIM-Karte mit mehreren Ausführungsumgebungen oder gesicherten Bereichen als Sicherheitselemente, wird beispielsweise das Sicherheitselement ausgewählt, welches die für die Applikation 200 benötigte Bezahlfunktion (Kreditkarte) beinhaltet.

In Schritt S5 wird dann eine vertrauenswürdige Instanz 3 bestimmt, welche im konkreten Fall vorgesehen ist, das in Schritt S4 bestimmte Sicherheitselement 20 zu verwalten, d.h. den sicherheitsrelevanten Anteil 202 der Applikation 200 in dem Sicherheitselement 20 zu installieren. Im vorliegenden Beispiel dient das TSM 3 als vertrauenswürdige Instanz. Auch die Bestimmung des TSM kann vom Anteil 201 der Applikation 200 oder der Steuerungseinheit 22 (im Endgerät 1 oder im Sicherheitselement 20,12) unterstützt werden. In der Regel ist durch das in Schritt S4 bestimmte Sicherheitselement bereits das "zuständige" TSM 3 vorgegeben. Es ist jedoch möglich, dass für ein Sicherheitselement 20 eine Mehrzahl von TSMs 3 für die Verwaltung des Sicherheitselements 10 zur Verfügung stehen bzw. ausgewählt werden können. Vorzugsweise speichert das Sicherheitselement 20 selbst eine Liste 21 von TSMs. Insbesondere kann - wie bereits erwähnt - jedem sicheren Bereich auf dem Sicherheitselement ein zuständiges TSM zugeordnet sein. Jedem sicheren Bereich kann in der Liste genau ein oder mehrere TSMs zugeordnet sein, die in Schritt S5 als zuständiges TSM auswählbar sind. Die Kommunikationsadresse des zuständigen TSM ist ebenfalls auf dem Sicherheitsmodul bzw. in der Liste 21 gespeichert.

Die Schritte S4 und/ oder S5 und/ oder S6 können entweder - wie zuvor beschrieben - durch den Anteil 202 der Applikation 200 oder aber von einer dedizierten Einheit 22 durchgeführt werden, die in einer Ausführungsumgebung des (physischen) Sicherheitselements oder dem Endgerät ausgeführt wird. Die dedizierte Einheit 22 zur Bestimmung des zuständigen TSM und zur entsprechenden Weiterleitung vereinfacht die Ausgestaltung der Applikation 200. Insbesondere kann eine dedizierte Einheit 22 vorzugsweise auf dem Sicherheitselement (aber auch auf dem Endgerät) die Schritte S4 - S6 mit Hilfe der auf dem Sicherheitselement gespeicherten Zuordnungsinformationen 21 durchführen. Die gespeicherten Zuordnungsinformationen 21 umfassen - neben der Zuordnung von Sicherheitselement oder sicherem Bereich zu TSM - auch die TSM-Kommunikationsadressen.

Mittels der Steuereinheit 22 wird dann in Schritt S6 eine Datenkommunikationsverbindung mit dem in Schritt S5 bestimmten TSM 3 aufgebaut. Diese Datenkommunikationsverbindung kann über Datenkommunikationsschnittstellen des Endgeräts 1, beispielsweise eine Antenne oder dergleichen, verlaufen. Über diese Datenkommunikationsverbindung sendet das Sicherheitselement 20 weiterhin in Schritt S6 den sicherheitsrelevanten Anteil 202, welcher dem Sicherheitselement 20 zu diesem Zweck von dem Endgerät 1 zuvor bereitgestellt worden ist, an den TSM 3. Das Sicherheitselement 20 hat Zugriff auf die entsprechenden Kontaktdaten bzw. -schnittstellen des TSM 3, welche beispielsweise in einem Speicher des Sicherheitselements 20 gespeichert sind oder durch das Sicherheitselement 20 von einem externen Server (nicht gezeigt) abgefragt werden können. Die Übertragung des Anteils 202 in Schritt S6 kann beispielsweise per SMS oder über das Internet, z.B. über einen Webservice, erfolgen.

In Schritt S7 prüft der TSM den von dem Sicherheitselement 20 empfangenen sicherheitsrelevanten Anteil 202. Die Prüfung kann sämtliche vorstehend beschriebenen Aspekte und/oder ergänzende Aspekte betreffen. In dem Fall allerdings, dass der Anteil 202 bereits ein Zertifikat einer Prüfinstanz umfasst, mittels welchem eine erfolgreiche Prüfung des Anteils 202 bestätigt wird, kann sich die Prüfung durch den TSM in Schritt S7 auf das Verifizieren des Zertifikats beschränken. In der Regel erfolgt dies, indem eine Signatur, welche die Prüfinstanz mit deren geheimen Schlüssel erstellt hat, mittels eines öffentlichen Schlüssels der Prüfinstanz verifiziert wird.

Es versteht sich, dass der TSM 3 die weiteren Schritte des Verfahrens nur durchführt, wenn die Prüfung in Schritt S7 erfolgreich verlaufen ist.

Im optionalen Schritt S8 bereitet der TSM 3, falls erforderlich, den Anteil 202 für eine in Schritt S9 nachfolgende Installation in dem Sicherheitselement 20 geeignet auf. Ein solcher Aufbereitungsschritt kann beispielsweise den Anteil 202 in ein vorgegebenes Format umwandeln, Sicherheitsanpassungen an dem Anteil 202 vornehmen, oder dergleichen. Diese Aufbereitung kann spezifisch für den TSM 3 sein, von der Art des Anteils 202 und/ oder dem Sicherheitselement 20 selbst abhängen.

Mit den Schritten S9 und S10 schließlich installiert der TSM 3 den gegebenenfalls aufbereiteten, sicherheitsrelevanten Anteil 202 der Applikation 200 in dem Sicherheitselement 20, welches in das Endgerät 1 integriert ist. In Schritt S9 wird der gegebenenfalls aufbereitete Anteil an das Endgerät zurück übertragen und in Schritt S10 somit mittels der Antwort des TSM 3 der sicherheitsrelevanten Anteil 202 der Applikation 200 auf dem Sicherheitselement 20 installiert. Der Schritt S10 umfasst insbesondere das Laden des Anteils in das Sicherheitselement und eine gegebenenfalls darauf folgende Aktivierung der Anwendung.

In einer Variante installiert der TSM 3 den Anteil 202 indem sie die Schritte S9 und S10 steuert. Ebenso kann aber auch der Schritt S10 von der Steuereinheit 22 gesteuert werden.

Für die Installation verwendet der TSM 3 zuvor mit dem Besitzer des Sicherheitselements 20 (in einem nicht gezeigten Schritt) ausgehandelte kryptographische Schlüssel, welche in entsprechender Form ebenfalls in dem Sicherheitselement 20 vorliegen. Der Ablauf einer entfernten Installation von Applikationen auf Sicherheitselementen durch eine Instanz wie das TSM 3 ist bekannt. Gerade die Installation von Anwendungen in sicheren Bereichen im Sinne der Global-Platform-Spezifikation ist hinreichend beschrieben.

Insbesondere wird also der vom Endgerät weitergeleitete sicherheitsrelevante Anteil 202 der Applikation 200 wieder zurück über das Netzwerk zum Endgerät übertragen. Der zurück übertragene Anteil 202 wird auf dem Sicherheitselement 20 installiert.

Es kann beispielsweise grundsätzlich vorgesehen sein, dass eine externe Instanz, im vorliegenden Beispiel z.B. der Applikationsanbieter 2, Speicherplatz in einem Sicherheitselement 20 des Endgeräts 1 mieten kann, insbesondere, um darin den Anteil 202 der Applikation 200 zu installieren. Eine Abrechnung der Kosten für das Mieten dieses Speicherplatzes soll dann automatisiert erfolgen können. Zu diesem Zweck stellt die Applikation 200, d.h. der bereits in Schritt S3 in dem Endgerät 1 installierte, nicht sicherheitsrelevante Anteil 201, entsprechende Anfragen hinsichtlich des Mietens von Speicherplatz an die Besitzer der in dem Endgerät 1 vorliegenden Sicherheitselemente 10.

Wird die Möglichkeit des Mietens seitens des Besitzers eines solchen Sicherheitselements 10 bestätigt, kann ein solches Mieten von Speicherplatz auf dem betreffenden Sicherheitselement 20 erfolgen, beispielsweise über eine entsprechende, automatisierte Schnittstelle. Insofern ist hier die Auswahl des Sicherheitselements 10 im Sinne des vorstehend beschriebenen Schritts S4 in spezifischer Weise erfolgt. Die Abrechnung der Kosten für das Mieten des Speicherplatzes erfolgt ebenfalls automatisch.

In einem weiteren, ergänzenden Schritt wird der TSM 3, welcher auch gemäß dieser Ausführungsform wie vorstehend mit Bezug auf Schritt S5 beschrieben, bestimmt worden ist, darüber informiert, dass der Besitzer des betreffenden Sicherheitselements 10 der Installation des Anteils 202 in dem gemieteten Speicherplatz des Sicherheitselements 10 zustimmt.

## Patentansprüche

1. Verfahren zur Installation eines sicherheitsrelevanten Anteils (202) einer von einem Applikationsanbieter (2) bereitgestellten Applikation (200) in einem Sicherheitselement (20) eines Endgeräts (1), umfassend die folgenden Schritte:
- Empfangen (S2) der Applikation (200) von dem Applikationsanbieter (2) in dem Endgerät (1), wobei die Applikation (200) den sicherheitsrelevanten Anteil (202) und einen nicht sicherheitsrelevanten Anteil (201) umfasst;
- Installieren (S3) des nicht sicherheitsrelevanten Anteils (201) der Applikation (200) in dem Endgerät (1); und
- Installieren (S4-S10) des sicherheitsrelevanten Anteils (202) der Applikation (200) in dem Sicherheitselement (20) des Endgeräts (1);
wobei für das Installieren (S4-S10) des sicherheitsrelevanten Anteils (202) der Applikation (200) folgende Schritte ausgeführt werden:
- Übertragen (S6) zumindest eines Teils des empfangenen, sicherheitsrelevanten Anteils (202) der Applikation (200) an eine das Sicherheitselement (20) verwaltende, entfernte, vertrauenswürdige Instanz (3);
- Empfangen (S9) einer Antwort der vertrauenswürdigen Instanz (3) für den sicherheitsrelevanten Anteil (202) der Applikation (200);
- Laden (S10) des sicherheitsrelevanten Anteils (202) der Applikation (200) in das Sicherheitselement (20) mittels der Antwort der vertrauenswürdigen Instanz (3).

2. Verfahren nach Anspruch 1, **dadurch gekennzeichnet, dass** erst die empfangene Antwort der vertrauenswürdigen Instanz das Laden (S10) ermöglicht.

3. Verfahren nach Anspruch 1 oder 2, **dadurch gekennzeichnet, dass** die vertrauenswürdige Instanz (3) den sicherheitsrelevanten Anteil (202) der Applikation (200) prüft (S7), insbesondere hinsichtlich Kompatibilität mit dem Sicherheitselement (20), einzuhaltender technischer Spezifikationen und/ oder Sicherheitsaspekten.

4. Verfahren nach Anspruch 3, **dadurch gekennzeichnet, dass** die vertrauenswürdige Instanz (3) den sicherheitsrelevanten Anteil (202) der Applikation (200) anhand eines Zertifikats einer Zertifizierungsstelle prüft, mit welchem der sicherheitsrelevante Anteil (202) versehen worden ist.

5. Verfahren nach einem der Ansprüche 1 bis 4, **gekennzeichnet durch** einen Schritt des Bestimmens (S4) des Sicherheitselements (20) aus einer Mehrzahl von Sicherheitselementen (20) vor dem Schritt des Übertragens (S6).

6. Verfahren nach einem der Ansprüche 1 bis 5, **gekennzeichnet durch** einen Schritt des Bestimmens (S4) eines sicheren Bereiches (23), in welchen der sicherheitsrelevante Anteil (202) der Applikation (200) geladen werden soll, aus einer Mehrzahl von sicheren Bereichen (23) auf dem Sicherheitselement (20) vor dem Schritt des Übertragens (S6).

7. Verfahren nach einem der Ansprüche 1 bis 6, **gekennzeichnet durch** den Schritt des Bestimmens (S5) einer das Sicherheitselement (20) verwaltenden, vertrauenswürdigen Instanz (3) vor dem Schritt des Übertragens (S6).

8. Verfahren nach einem der Ansprüche 1 bis 7, **gekennzeichnet durch** in dem Schritt des Bestimmens (S5) der vertrauenswürdigen Instanz (3), die vertrauenswürdigen Instanz (3) aus einer Mehrzahl von vertrauenswürdigen Instanzen (3), welche zumindest einen sicheren Bereich (23) des Sicherheitsmoduls (20) verwalten, ausgewählt wird.

9. Verfahren nach einem der Ansprüche 1 bis 8, **dadurch gekennzeichnet, dass** der Schritt des Installierens (S9) des sicherheitsrelevanten Anteils (202) in dem Sicherheitselement (20) durch die vertrauenswürdige Instanz (3) kryptographisch gesichert durchgeführt wird, wobei hierzu verwendete kryptographische Schlüssel in einem dem Installieren vorgelagerten Schritt zwischen einem Besitzer des Sicherheitselements (20) bzw. einem Besitzer eines sicheren Bereiches (23) auf dem Sicherheitselement (20) und der vertrauenswürdigen Instanz (3) ausgetauscht werden.

10. Verfahren nach einem der Ansprüche 1 bis 9, **dadurch gekennzeichnet, dass** der sicherheitsrelevante Anteil (202) der Applikation (200) an die vertrauenswürdigen Instanz (3) übertragen (S6) und von der vertrauenswürdigen Instanz (3) in aufbereiteter Form wieder empfangen (S9) wird.

11. Verfahren nach einem der Ansprüche 1 bis 10, **dadurch gekennzeichnet, dass** das Endgerät (1) die Applikation (200) von dem Applikationsanbieter (2) anfordert (S1).

12. Endgerät (1) mit einem Sicherheitselement (20) wobei das Endgerät (10) eingerichtet ist, ein Verfahren nach einem der Ansprüche 1 bis 11 durchzuführen.

13. Sicherheitselement (20) für ein Endgerät (10), wobei das Sicherheitselement (20) gemäß dem Verfahren nach einem der Ansprüche 1 bis 12 betrieben wird und dazu eingerichtet ist, wenn es in das Endgerät (10) integriert ist, einen sicherheitsrelevanten Anteil (202) einer durch das Endgerät (10) empfangenen Applikation (200), welcher in dem Sicherheitselement (20) zu installieren ist, an eine das Sicherheitselement (20) verwaltende, entfernte vertrauenswürdige Instanz (3) zu übertragen.

14. Sicherheitselement (20) nach Anspruch 13, **dadurch gekennzeichnet, dass** das Sicherheitselement (20) ausgebildet ist als
- aus dem Endgerät (1) entfernbares Sicherheitselement (20), insbesondere als SIM/UICC-Mobilfunkkarte, als sichere Multimediakarte oder dergleichen,
- als fest in das Endgerät (1) eingebautes Sicherheitselement (20), insbesondere als embedded-SIM/UICC-Mobilfunkkarte, als TPM, als NFC-Modul, oder
- als sichere Ausführungsumgebung (12), die neben einer normalen Ausführungsumgebung (11) auf dem Prozessor (10) des Endgerätes (1) ausgeführt wird, beispielsweise als "Trusted Execution Environment" gemäß der "Global Platform"-Spezifikation.

15. Entfernte vertrauenswürdige Instanz (3), die gemäß dem Verfahren nach einem der Ansprüche 1 bis 12 betrieben wird und zum Empfang eines zweiten Anteils (202) einer Applikation (200) eingerichtet ist, der auf einem Sicherheitselement (20) zu installieren ist, von einem Endgerät (1), wobei der erster Anteil (201) der Applikation auf dem Endgerät (1) installiert ist, und die vertrauenswürdige Instanz eingerichtet ist zum Installieren des zweiten Anteils (202) der Applikation auf dem Sicherheitselement (20) in dem Endgerät (1) in Antwort auf den Empfang des zweiten Anteils (202) von dem Endgerät (1).

## Claims

1. A method for installing a security-relevant portion (202) of an application (200) made available by an application provider (2) in a security element (20) of a terminal (1), comprising the following steps of:
- receiving (S2) the application (200) from the application provider (2) in the terminal (1), wherein the application (200) comprises the security-relevant portion (202) and a non-security-relevant portion (201);
- installing (S3) the non-security-relevant portion (201) of the application (200) in the terminal (1); and
- installing (S4-S10) the security-relevant portion (202) of the application (200) in the security element (20) of the terminal (1); wherein for installing (S4-S10) the security-relevant portion (202) of the application (200) the following steps are executed:
- transmitting (S6) at least a part of the received, security-relevant portion (202) of the application (200) to a remote trustworthy instance (3) administrating the security element (20);
- receiving (S9) a response of the trustworthy instance (3) for the security-relevant portion (202) of the application (200);
- loading (S10) the security-relevant portion (202) of the application (200) into the security element (20) by means of the response of the trustworthy instance (3).

2. The method according to claim 1, **characterized in that** only the received response of the trustworthy instance makes possible the loading (S10).

3. The method according to claim 1 or 2, **characterized in that** the trustworthy instance (3) checks (S7) the security-relevant portion (202) of the application (200), in particular in view of compatibility with the security element (20), technical specifications to be complied with and/or security aspects.

4. The method according to claim 3, **characterized in that** the trustworthy instance (3) checks the security-relevant portion (202) of the application (200) by means of a certificate of a certifying body with which the security-relevant portion (202) has been supplied.

5. The method according to any of the claims 1 to 4, **characterized by** a step of determining (S4) the security element (20) from a plurality of security elements (20) before the step of transmitting (S6).

6. The method according to any of the claims 1 to 5, **characterized by** a step of determining (S4) a secure area (23), into which the security-relevant portion (202) of the application (200) is to be loaded, from a plurality of secure areas (23) on the security element (20) before the step of transmitting (S6).

7. The method according to any of the claims 1 to 6, **characterized by** the step of determining (S5) a trustworthy instance (3) administrating the security element (20) before the step of transmitting (S6).

8. The method according to any of the claims 1 to 7, **characterized in that** in the step of determining (S5) the trustworthy instance (3), the trustworthy instance (3) is selected from a plurality of trustworthy instances (3) administrating at least one secure area (23) of the security module (20).

9. The method according to any of the claims 1 to 8, **characterized in that** the step of installing (S9) the security-relevant portion (202) in the security element (20) is carried out by the trustworthy instance (3) in cryptographically secured fashion, wherein cryptographic keys employed for this purpose are exchanged in a step prior to the installation between an owner of the security element (20) and/or an owner of a secure area (23) on the security element (20) and the trustworthy instance (3).

10. The method according to any of the claims 1 to 9, **characterized in that** the security-relevant portion (202) of the application (200) is transmitted (S6) to the trustworthy instance (3) and is received again (S9) from the trustworthy instance (3) in a prepared form.

11. The method according to any of the claims 1 to 10, **characterized in that** the terminal (1) requests (S1) the application (200) from the application provider (2).

12. A terminal (1) with a security element (20), wherein the terminal (10) is adapted to carry out a method according to any of the claims 1 to 11.

13. A security element (20) for a terminal (10), wherein the security element (20) is operated in accordance with the method according to any of the claims 1 to 12 and, when it is integrated in the terminal (10), is adapted to transmit a security-relevant portion (202) of an application (200) received by the terminal (10), said security-relevant portion requiring installation in the security element (20), to a remote trustworthy instance (3) administrating the security element (20).

14. The security element (20) according to claim 13, **characterized in that** the security element (20) is configured as
- a security element (20) that can be removed from the terminal (1), in particular as a SIM/ UICC mobile communication card, as a secure multimedia card or the like,
- a security element (20) permanently installed in the terminal (1), in particular as an embedded SIM/ UICC mobile communication card, as a TPM, as an NFC module, or
- as a secure execution environment (12) executed on the processor (10) of the terminal (1) in addition to a normal execution environment (11), for example as a "trusted execution environment" according to the "Global Platform" specification.

15. A remote trustworthy instance (3) that is operated in accordance with the method according to any of the claims 1 to 12 and is adapted to receive from a terminal (1) a second portion (202) of an application (200) that is to be installed on a security element (20), wherein the first portion (201) of the application is installed on the terminal (1), and the trustworthy instance is adapted to install the second portion (202) of the application on the security element (20) in the terminal (1) in response to receiving the second portion (202) from the terminal (1).

## Revendications

1. Procédé d'installation d'une part (202), importante pour la sécurité, d'une application (200), mise à disposition par un fournisseur d'applications (2), dans un élément de sécurité (20) d'un terminal (1), comprenant les étapes suivantes :
- réception (S2) de l'application (200) de la part du fournisseur d'applications (2) dans le terminal (1), l'application (200) comprenant la part (202) importante pour la sécurité et une part (201) non importante pour la sécurité ;
- installation (S3) de la part (201) non importante pour la sécurité de l'application (200) dans le terminal (1) ; et
- installation (S4-S10) de la part (202) importante pour la sécurité de l'application (200) dans l'élément de sécurité (20) du terminal (1) ;
cependant que, pour l'installation (S4-S10) de la part (202) importante pour la sécurité de l'application (200), les étapes suivantes sont exécutées :
- transmission (S6) d'au moins une partie de la part (202) importante pour la sécurité de l'application (200) reçue à une instance fiable (3) éloignée gérant l'élément de sécurité (20) ;
- réception (S9) d'une réponse de l'instance fiable (3) pour la part (202) importante pour la sécurité de l'application (200) ;
- chargement (S 10) de la part (202) importante pour la sécurité de l'application (200) dans l'élément de sécurité (20) au moyen de la réponse de l'instance fiable (3).

2. Procédé selon la revendication 1, **caractérisé en ce que** c'est seulement la réponse de l'instance fiable (3) reçue qui permet le chargement (S10).

3. Procédé selon la revendication 1 ou 2, **caractérisé en ce que** l'instance fiable (3) vérifie (S7) la part (202) importante pour la sécurité de l'application (200), en particulier quant à la compatibilité avec l'élément de sécurité (20), quant à des spécifications techniques à respecter et/ou à des aspects relatifs à la sécurité.

4. Procédé selon la revendication 3, **caractérisé en ce que** l'instance fiable (3) vérifie la part (202) importante pour la sécurité de l'application (200) au moyen d'un certificat d'un organe de certification dont a été pourvue la part (202) importante pour la sécurité.

5. Procédé selon une des revendications de 1 à 4, **caractérisé par** une étape de la détermination (S4) de l'élément de sécurité (20) depuis une pluralité d'éléments de sécurité (20) avant l'étape de la transmission (S6).

6. Procédé selon une des revendications de 1 à 5, **caractérisé par** une étape de la détermination (S4) d'une zone sûre (23) dans laquelle la part (202) importante pour la sécurité de l'application (200) doit être chargée, depuis une pluralité de zones sûres (23) sur l'élément de sécurité (20) avant l'étape de la transmission (S6).

7. Procédé selon une des revendications de 1 à 6, **caractérisé par** l'étape de la détermination (S5) d'une instance fiable (3) gérant l'élément de sécurité (20), avant l'étape de la transmission (S6).

8. Procédé selon une des revendications de 1 **à 7, caractérisé en ce que**, lors de l'étape de la détermination (S5) de l'instance fiable (3), l'instance fiable (3) est sélectionnée parmi une pluralité d'instances fiables (3) gérant au moins une zone sûre (23) du module de sécurité (20).

9. Procédé selon une des revendications de 1 à 8, **caractérisé en ce que** l'étape de l'installation (S9) de la part (202) importante pour la sécurité dans l'élément de sécurité (20) par l'instance fiable (3) a lieu de façon cryptographiquement sécurisée, cependant que des clés cryptographiques utilisées pour cela sont, lors d'une étape en amont de l'installation, échangées entre un possesseur de l'élément de sécurité (20) ou un possesseur d'une zone sûre (23) sur l'élément de sécurité (20) et l'instance fiable (3).

10. Procédé selon une des revendications de 1 à 9, **caractérisé en ce que** la part (202) importante pour la sécurité de l'application (200) est transmise (S6) à l'instance fiable (3) et est, en provenance de l'instance fiable (3), à nouveau reçue (S9) sous forme conditionnée.

11. Procédé selon une des revendications de 1 à 10, **caractérisé en ce que** le terminal (1) demande (S1) l'application (200) au fournisseur d'applications (2).

12. Terminal (1) comportant un élément de sécurité (20), le terminal (10) étant configuré pour effectuer un procédé selon une des revendications de 1 à 11.

13. Élément de sécurité (20) destiné à un terminal (10), l'élément de sécurité (20) étant exploité suivant le procédé selon une des revendications de 1 à 12 et étant configuré pour, quand il est intégré dans le terminal (10), transmettre une part (202) importante pour la sécurité d'une application (200) reçue par le terminal (10) et devant être installée dans l'élément de sécurité (20) à une instance fiable (3) éloignée gérant l'élément de sécurité (20).

14. Élément de sécurité (20) selon la revendication 13, **caractérisé en ce que** l'élément de sécurité (20) est conçu en tant que
- élément de sécurité (20) pouvant être enlevé du terminal (1), en particulier en tant que carte de téléphonie mobile SIM/UICC, en tant que carte de multimédia sûre ou objet similaire,
- en tant qu'élément de sécurité (20) encastré de manière fixe dans le terminal (1), en particulier en tant que carte de téléphonie mobile embedded-SIM/UICC, en tant que TPM, en tant que module NFC, ou
- en tant qu'environnement d'exécution (12) sûr exécuté en plus d'un environnement d'exécution (11) normal sur le processeur (10) du terminal (1), par exemple en tant que « Trusted Exécution Environment » conformément à la spécification « Global Platform ».

15. Instance fiable (3) éloignée qui est exploitée suivant le procédé selon une des revendications de 1 à 12 et est configurée pour la réception d'une deuxième part (202) d'une application (200) devant être installée sur un élément de sécurité (20) d'un terminal (1), cependant que la première part (201) de l'application est installée sur le terminal (1) et que l'instance fiable est configurée pour l'installation de la deuxième part (202) de l'application sur l'élément de sécurité (20) dans le terminal (1) en réponse à la réception de la deuxième part (202) par le terminal (1).
